# EUROPEAN PATENT APPLICATION

(11) **EP 3 382 870 A1**
(43) Date of publication of application: **03.10.2018**
(21) Application number: 18165134.0
(22) Date of filing: 29.03.2018
(51) Int. Cl.: H02M 1/12, H02M 1/00, H02M 7/5387, H02P 27/04, H02P 27/08

(54) **INVERTER APPARATUS, AIR CONDITIONER, METHOD OF CONTROLLING INVERTER APPARATUS, AND PROGRAM**

(30) Priority: 31.03.2017 JP 2017069534
(71) Applicant: MITSUBISHI HEAVY INDUSTRIES THERMAL SYSTEMS, LTD., Tokyo 108-8215 (JP)
(72) Inventor: WATANABE, Takamasa, Tokyo, 108-8215 (JP); SHIMIZU, Kenji, Tokyo, 108-8215 (JP); SUMITO, Kiyotaka, Tokyo, 108-8215 (JP); SUNOHARA, Tetsu, Tokyo, 108-8215 (JP); KOMIYA, Shinichi, Tokyo, 108-8215 (JP)
(74) Representative: Henkel, Breuer & Partner

(57) **Abstract**

Provided is an inverter apparatus (1) capable of driving a motor (80) including: a voltage command unit (12) which is configured to generate a voltage command on the basis of a speed command of the motor (80); a correction command unit (18) which is configured to generate a correction command in which a command of stopping a PWM control pulse signal and a compensation command of compensating for distortion of a line voltage due to the stopping command are added to the voltage command in at least a part of periods of a zero voltage region of the voltage command; and an inverter main circuit (20) which is configured to switch a switching element group with a pulse signal generated on the basis of the correction command and thereby convert a DC voltage into a 3-phase AC voltage.

## Description

### BACKGROUND OF THE INVENTION

### [Field of the Invention]

The present invention relates to an inverter apparatus, an air conditioner, a method of controlling inverter apparatus, and a program.

### [Description of Related Art]

In an air conditioner (an air conditioning unit), an inverter apparatus which generates a load (motor) driving AC power for freely driving a motor of a compressor is mainly mounted. A well-known inverter apparatus temporarily converts 3-phase AC voltage, which is input from a commercial power supply (for example, AC 200 V 3-phase AC power supply), into a DC voltage through a rectifier circuit (converter), and converts the DC voltage into a desired motor driving AC power by the inverter apparatus.

As such an inverter apparatus, a device which controls an output to a load according to a V/f control system, a vector control system, or the like is known.

For example, Patent Document 1 discloses a method of generating a command voltage from a motor current detected according to a vector control system and generating a PWM signal according to the command voltage to control an output of the inverter apparatus.

### [Patent Documents]

[Patent Document 1] Japanese Patent No. 5675567

### SUMMARY OF THE INVENTION

In Patent Document 1, the inverter apparatus stops the PWM signal in the vicinity of a current zero crossing. However, when the PWM signal is stopped, the waveform of each phase line voltage applied to the motor becomes a distorted waveform as compared with a sine wave. For this reason, there is a possibility that a harmonic component may increase.

An object of the present invention is to provide an inverter apparatus, an air conditioner, a method of controlling inverter apparatus, and a program in which an increase in a harmonic component due to stopping of a PWM signal is able to be suppressed.

An inverter apparatus according to a first aspect is an inverter apparatus capable of driving a motor, including: a voltage command unit which is configured to generate a voltage command on the basis of a speed command of the motor; a correction command unit which is configured to generate a correction command in which a command of stopping a PWM control pulse signal and a compensation command of compensating for distortion of a line voltage due to the stopping command are added to the voltage command in at least a part of periods of a zero voltage region of the voltage command; and an inverter main circuit which is configured to switch a switching element group with a pulse signal generated on the basis of the correction command and thereby convert a DC voltage into a 3-phase AC voltage.

According to this aspect, since the inverter apparatus compensates for the distortion of the line voltage due to the stopping of the PWM signal by the compensation command, it is possible to suppress an increase of a harmonic component of a line voltage waveform.

Further, an inverter apparatus according to a second aspect is the inverter apparatus according to the first aspect, wherein the correction command unit is configured to generate a correction command of each phase of the 3-phase AC voltages, and wherein the compensation command is added to a phase different from a phase to which the command of stopping the PWM control pulse signal is added during a period of adding the command of stopping the PWM control pulse signal.

According to this aspect, since the compensation command is added to a phase different from the phase to which the command of stopping the PWM control pulse signal is applied, it is possible to suppress an increase of the harmonic component while stopping the PWM control pulse signal. When the command of stopping the PWM signal is maintained, the inverter apparatus can maintain switching loss reduction performance due to the stopping of the PWM signal.

Further, an inverter apparatus according to a third aspect is the inverter apparatus according to the first or second aspect, wherein the correction command unit is configured to add a multi-stage compensation voltage as the compensation command.

According to this aspect, since it is possible to add a compensation voltage similar to the voltage command to be trimmed by the command of stopping the PWM control pulse signal, the inverter apparatus can suppress an increase of the harmonic component in the line voltage waveform.

Further, an inverter apparatus according to a fourth aspect is the inverter apparatus according to any one of the first to third aspects, wherein the switching element group includes pairs of switching elements of an upper arm and a lower arm in association with each phase of the 3-phase AC voltage, respectively, and as the PWM control, control of turning on at least one of the switching element of the upper arm and the switching element of the lower arm over the entire region of a plurality of cycles of a PWM cycle among the large regions of each phase voltage of the 3-phase AC voltage is performed.

According to this aspect, since the inverter apparatus turns on (fully-on) at least one of the switching element of the upper arm and the switching element of the lower arm over a plurality of PWM cycles, respectively, in a region in which each phase voltage of the 3-phase AC voltage is large, the switching loss can be reduced.

Further, an inverter apparatus according to a fifth aspect is the inverter apparatus according to any one of the first to fourth aspects, further including: a phase calculation unit which is configured to integrate an inverter output frequency generated from the speed command and calculate the phase, wherein the correction command unit is configured to generate the correction command based on the phase.

According to this aspect, since the inverter apparatus is configured to generate an output voltage phase from the speed command, it is possible to stop the PWM control pulse signal according to the phase matching the speed command and to compensate for the line voltage according to the phase matching the speed command.

Further, an inverter apparatus according to a sixth aspect is the inverter apparatus according to any one of the first to fifth aspects, wherein V/f control is performed.

According to this aspect, since the inverter apparatus is configured to add the command of stopping the PWM control pulse signal to the generated voltage command in the V/f control, it is possible to stop the PWM pulse signal at an arbitrary timing. Therefore, a delay in stopping the PWM signal is prevented.

Further, an air conditioner according to a seventh aspect is an air conditioner including: the inverter apparatus according to any one of the first to sixth aspects; and the motor rotationally driven by the 3-phase AC voltage.

Further, a method of controlling inverter apparatus according to an eighth aspect is a method of controlling an inverter apparatus capable of driving a motor, including: a voltage command generation step of generating a voltage command, using a speed command of the motor; a correction command generation step of generating a correction command in which a command of stopping a PWM control pulse signal and a compensation command of compensating for a line voltage due to the stopping command are added to the voltage command in at least a part of periods of a zero voltage region of the voltage command; and an inverse conversion step of switching a switching element group by the pulse signal generated on the basis of the correction command and thereby converting a DC voltage into a 3-phase AC voltage.

Further, a program according to a ninth aspect is a program which is configured to cause a computer of an inverter apparatus capable of driving a motor and including an inverter main circuit converting a DC voltage into a 3-phase AC voltage by switching a switching element group by a pulse signal generated on the basis of a correction command to function as: a voltage command unit which is configured to generate a voltage command using a speed command of the motor; and a correction command unit which is configured to generate a correction command in which a command of stopping a PWM control pulse signal and a compensation command of compensating for a line voltage due to the stopping command are added to the voltage command in at least a part of periods of a zero voltage region of the voltage command.

According to any one of the above-described aspects of the present invention, it is possible to suppress an increase in a harmonic component due to the stopping of the PWM signal.

### BRIEF DESCRIPTION OF THE DRAWINGS

FIG. 1 is an overall view of an inverter apparatus according to a first embodiment of the present invention.
FIG. 2 is a diagram showing a functional configuration of a control device according to a first embodiment of the present invention.
FIG. 3 is a diagram showing a function of PWM control.
FIG. 4 is a waveform diagram of an AC voltage command before a compensation command ratio is applied thereto.
FIG. 5 is a diagram showing waveforms of an AC voltage command before a compensation command ratio is applied thereto, a compensation command, and an AC voltage command after a compensation command ratio is applied thereto.
FIG. 6 is a diagram showing a waveform of a corrected AC voltage command in a first embodiment according to the present invention.
FIG. 7 is a diagram showing a relationship between a waveform of a corrected AC voltage command and a gate signal in the first embodiment according to the present invention.
FIG. 8 is a diagram showing a waveform of a line voltage between UV in the first embodiment according to the present invention.
FIG. 9 is a diagram showing a waveform of a line voltage between UV in a reference example.
FIG. 10 is a diagram showing a frequency analysis waveform of a line voltage between UV in the first embodiment according to the present invention.
FIG. 11 is a diagram showing a frequency analysis waveform of a line voltage between UV in the reference example.
FIG. 12 is a diagram showing PWM stop control in the first embodiment according to the present invention.
FIG. 13 is a diagram showing PWM stop control in a reference example.
FIG 14 is an overall view of an inverter apparatus in a second embodiment according to the present invention.
FIG. 15 is a flowchart of a control method of the control device in an embodiment according to the present invention.

### DETAILED DESCRIPTION OF THE INVENTION

Hereinafter, various embodiments of the present invention will be described with reference to the drawings.

### <First embodiment>

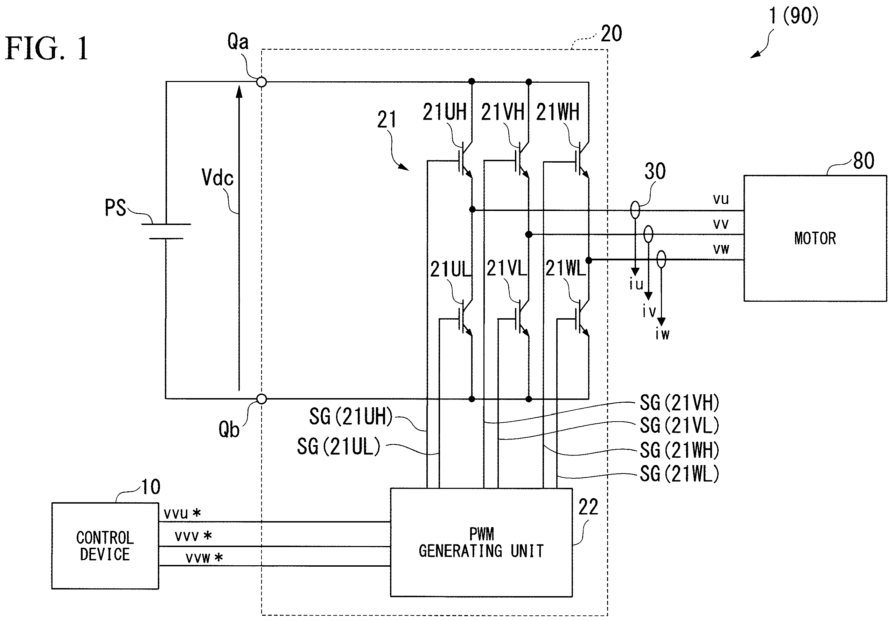

Hereinafter, an inverter apparatus according to a first embodiment will be described in detail with reference to FIGS. 1 to 13.

### (Circuit configuration of inverter apparatus)

FIG. 1 is a diagram showing a circuit configuration of the inverter apparatus according to an embodiment.

The inverter apparatus 1 is mounted in an outdoor unit of an air conditioner (an air conditioning unit) 90. The inverter apparatus 1 outputs a load driving AC voltage (a 3-phase AC voltage) depending on a separately input speed command to a 3-phase AC motor (a motor 80) for driving a compressor of the outdoor unit. The inverter apparatus 1 rotates the 3-phase AC motor (the motor 80) which is a load at a desired rotation speed on the basis of the load driving AC voltage.

The inverter apparatus 1 includes a control device 10, an inverter main circuit 20, and a motor current detection unit 30.

The inverter apparatus 1 converts a DC voltage Vdc supplied from a DC power supply PS into 3-phase AC voltages including a U-phase AC voltage, a V-phase AC voltage, and a W-phase AC voltage which are load driving AC voltages for rotationally driving the motor 80.

The motor current detection unit 30 is provided in each wiring of the 3-phase connected to the motor 80 from the inverter apparatus 1. The motor current detection unit 30 detects the respective currents iu, iv, and iw of the U-phase, the V-phase, and the W-phase flowing through the motor 80 in association with the 3-phase AC voltages (AC voltages vu, vv, and vw) of the 3-phases which are output from the inverter apparatus 1 to the motor 80, and reports the detection results of the respective currents iu, iv, and iw to the control device 10.

### (Inverter main circuit)

The inverter main circuit 20 includes a switching element group 21, a positive electrode DC terminal Qa, a negative electrode DC terminal Qb, and a PWM generating unit 22.

The positive electrode DC terminal Qa and the negative electrode DC terminal Qb are terminals to which the DC voltage Vdc is input.

The positive electrode DC terminal Qa and the negative electrode DC terminal Qb are connected to the positive electrode and the negative electrode of the DC power source PS, respectively.

The switching element group 21 includes three pairs of two switching elements connected in series between the DC voltage Vdc. Here, the switching element is, for example, a power transistor such as an insulated gate bipolar transistor (IGBT). Each pair of the series-connected switching elements is provided to correspond to each of the 3-phases for rotationally driving the 3-phase AC motor (motor 80).

As shown in FIG. 1, the switching element group 21 has a pair of switching element 21UH of an upper arm and switching element 21UL of a lower arm connected in series from the positive electrode DC terminal Qa, to which a DC voltage Vdc is input, to the negative electrode DC terminal Qb.

Further, the switching element group 21 has a pair of switching element 21 VH of the upper arm and switching element 21 VL of the lower arm connected in series from the positive electrode DC terminal Qa to the negative electrode DC terminal Qb.

Further, the switching element group 21 has a pair of switching element 21WH of the upper arm and switching element 21 WL of the lower arm connected in series from the positive electrode DC terminal Qa to the negative electrode DC terminal Qb.

The pair of the switching element 21UH of the upper arm and the switching element 21UL of the lower arm is switched by the gate signal of the PWM generating unit 22 to be described below so that the U-phase AC voltage vu is generated. The pair of the switching element 21UH of the upper arm and the switching element 21UL of the lower arm is alternately switched in a period except for the entire period of the peak voltage region RGP and the mask period of the zero voltage region RGZ which will be described below.

Similarly, the pair of the switching element 21VH of the upper arm and the switching element 21 VL of the lower arm is switched by the gate signal of the PWM generating unit 22 so that the V-phase AC voltage vv is generated. The pair of the switching element 21 VH of the upper arm and the switching element 21 VL of the lower arm is alternately switched in a period except for the entire period of the peak voltage region RGP and the mask period of the zero voltage region RGZ which will be described below.

Similarly, the pair of the switching element 21WH of the upper arm and the switching element 21WL of the lower arm is switched by the gate signal of the PWM generating unit 22 so that the W-phase AC voltage vw is generated. The pair of the switching element 21 WH of the upper arm and the switching element 21 WL of the lower arm is alternately switched in a period except for the entire period of the peak voltage region RGP and the mask period of the zero voltage region RGZ which will be described below.

The PWM generating unit 22 generates a gate signal for driving the switching element group 21 in association with a correction command (to be described below) received from the control device 10, and turns on and off the switching element group 21.

In the present embodiment, the PWM generating unit 22 acquires corrected AC voltage commands vvu*, vvv*, and vvw* from a correction command unit 18. The PWM generating unit 22 generates PWM-controlled pulse signals (hereinafter also referred to as "PWM signals") at an on-duty cycle proportional to the voltages at the respective timings of the respective waveforms of the corrected AC voltage commands vvu*, vvv*, and vvw* thus acquired.

Specifically, the PWM generating unit 22 outputs a gate signal SG (21UH), a gate signal SG (21UL), a gate signal SG (21 VH), a gate signal SG (21 VL), a gate signal SG (21WH), and a gate signal SG (21WL) to each gate of the switching element 21UH, the switching element 21UL, the switching element 21VH, the switching element 21 VL, the switching element 21 WH, and the switching element 21 WL to be described later, respectively.

The PWM generating unit 22 generates the gate signal SG (21UH) and the gate signal SG (21UL) on the basis of the corrected AC voltage command vvu*.

Similarly, the PWM generating unit 22 generates the gate signal SG (21VH) and the gate signal SG (21VL) on the basis of the corrected AC voltage command vvv*.

Similarly, the PWM generating unit 22 generates the gate signal SG (21WH) and the gate signal SG (21WL) on the basis of the corrected AC voltage command vvw*.

### (Control device)

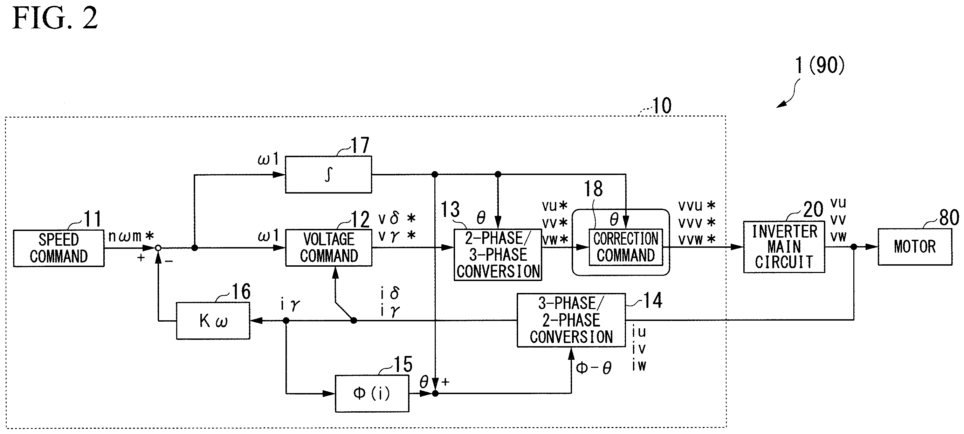

As shown in FIG. 2, the control device 10 functionally includes a speed command unit 11, a voltage command unit 12, a 2-phase/3-phase conversion unit 13, a 3-phase/2-phase conversion unit 14, a power factor angle setting unit 15, a speed correction unit 16, a phase calculation unit 17, and a correction command unit 18.

In the present embodiment, a computer system functions as the control device 10 due to the execution of a program which will be described below.

The speed command unit 11 outputs a speed command nωm* for rotating the motor 80 at a desired rotation speed ω (n is the number of pole pairs of the motor 80). The speed command nωm* is subjected to a correction process by the speed correction unit 16 and becomes a new speed command ω1. The speed command ω1 is input to each of the voltage command unit 12 and the phase calculation unit 17.

The voltage command unit 12 receives an input of the inverter output frequency ω1 which is a new speed command, and generates a voltage command substantially proportional to the inverter output frequency ω1 in two axes (δ-axis, γ-axis) of the rotation orthogonal coordinate system.

In the present embodiment, the speed command unit 11 generates and outputs a δ-axis voltage command vδ* and a γ-axis voltage command vγ* as the voltage commands.

The 2-phase/3-phase conversion unit 13 converts coordinates of the voltage command, which is output from the voltage command unit 12, into AC voltage commands vu*, vv*, and vw* corresponding to each of the 3-phase AC voltages which are output from the inverter main circuit 20. The 2-phase/3-phase conversion unit 13 performs the coordinate conversion according to the phase θ obtained from a phase calculation unit 17 to be described below.

The 3-phase/2-phase conversion unit 14 acquires the currents iu, iv, and iw detected by the motor current detection unit 30. The 3-phase/2-phase conversion unit 14 performs the coordinate conversion of the acquired currents iu, iv, and iw into a δ-axis current component iδ (excitation current component) and a γ-axis current component iγ (torque current component) which are current components of the two axes (δ axis, γ axis) forming the motor current I. The converted δ-axis current component iδ and the γ-axis current component iγ are fed back to the voltage command unit 12.

The power factor angle setting unit 15 sets the phase difference φ and is used for adjustment of the power factor. In the present embodiment, the adjustment of the power factor is performed by calculating the phase difference φ in association with the γ-axis current component iγ. When it is not necessary to adjust the power factor with respect to the phase θ which is the phase of the motor application voltage (AC voltages vu, vv, and vw) of the motor 80 by the calculated phase difference φ, the power factor angle setting unit 15 may not be provided.

The speed correction unit 16 multiplies the γ-axis current component iγ by the gain Kω. The γ-axis current component iγ multiplied by the gain Kω is negatively fed back to the speed command nωm* and is used for correction of the speed command nωm* so that the motor 80 stably operates. When it is not necessary to stabilize the motor 80, the speed correction unit 16 may not be provided.

The phase calculation unit 17 integrates the inverter output frequency ω1, calculates the phase θ, and outputs the phase θ to each of the 2-phase/3-phase conversion unit 13 and the correction command unit 18.

The correction command unit 18 obtains the AC voltage commands vu*, vv*, and vw* from the 2-phase/3-phase conversion unit 13.

As will be described below, the correction command unit 18 controls the inverter main circuit 20 by generating a correction command in which a command of stopping the PWM signal in the zero voltage regions of the AC voltage commands vu*, vv*, and vw* and a compensation command of compensating for distortion of the line voltage due to the stopping command are added to the voltage command.

Since the specific description of the control device 10 is described in Japanese Patent No. 4,764,124, except for the correction command unit 18, a detailed description thereof will be omitted.

Also, when feedback control is not required and open control is performed, the 3-phase/2-phase conversion unit 14, the power factor angle setting unit 15, and the speed correction unit 16 may be eliminated.

### (Correction command unit)

In the present embodiment, the correction command unit 18 generates the corrected AC voltage commands vvu*, vvv*, and vvw* as the correction commands from the AC voltage commands vu*, vv*, and vw*, respectively, and outputs the corrected AC voltage commands to the PWM generating unit 22.

The corrected AC voltage commands vvu*, vvv*, and vvw* are generated as below.

The correction command unit 18 acquires voltage waveforms approximate to the respective waveforms of AC voltages vu, vv, and vw as the AC voltage commands vu*, vv*, and vw*.

The correction command unit 18 performs two-arm type control to be described below and corrects the acquired voltage waveforms of the AC voltage commands vu*, vv*, and vw* so that the PWM pulse is stopped in the zero voltage regions of each voltage waveform. Further, the correction command unit 18 corrects the acquired voltage waveforms of the AC voltage commands vu*, vv*, and vw* to compensate for the distortion of the line voltage.

In the present embodiment, the correction command unit 18 corrects the voltage waveforms of the AC voltage commands vu*, vv*, and vw* to waveforms J3 to be described below as the corrected AC voltage commands vvu*, vvv*, and vvw*.

### (Two-arm type control)

First, the two-arm type control in this embodiment will be described.

When the AC voltage commands vu*, vv*, and vw* generated from the voltage command (δ-axis voltage command vδ*, and γ-axis voltage command vγ*) and the phase θ are sine waves, respectively, if the inverter apparatus 1 performs the PWM control in the state of the sine wave, the switching loss in the switching element group 21 is large.

In order to suppress the switching loss in the switching element group 21, control (two-arm type control) of turning on each of the switching elements all over the regions of the plural cycles of the PWM cycle is performed.

That is, as the two-arm type control, the inverter apparatus 1 performs the control of turning on (fully-on) each of the switching elements 21UH, 21VH, and 21WH of the upper arm, and the switching elements 21UL, 21VL, and 21WL of the lower arm all over the regions of the plural cycles of the PWM cycle, in the region in which (the absolute value of) each phase voltage of the 3-phase AC voltage is large.

Therefore, the control device 10 corrects the voltage command such that the on-duty cycle of the PWM signal is 100% (fully-on) over a predetermined electrical angle centered on the peak voltage (positive peak voltage and negative peak voltage) of the sine wave with a large switching loss.

In this embodiment, in order to perform the two-arm type control, the correction command unit 18 raises the voltage over a predetermined electrical angle centered on the peaks of the respective voltage waveforms of the AC voltage commands vu*, vv*, and vw *, and corrects the voltage waveform so that the duty cycle of the PWM signal becomes 100%. The reason for correcting to such a waveform is as follows.

The PWM generating unit 22 changes the voltage which is output from the inverter main circuit 20, by changing the ratio (the duty cycle of the PWM signal) of the on-pulse width to the pulse cycle of the signal that turns on and off the switching element group 21.

When a predetermined voltage waveform is output to the inverter main circuit 20, the PWM generating unit 22 modulates the duty cycle of the PWM signal so as to be proportional to the voltage at each moment of the voltage waveform to be generated, and supplies the predetermined voltage waveform to the switching element group 21.

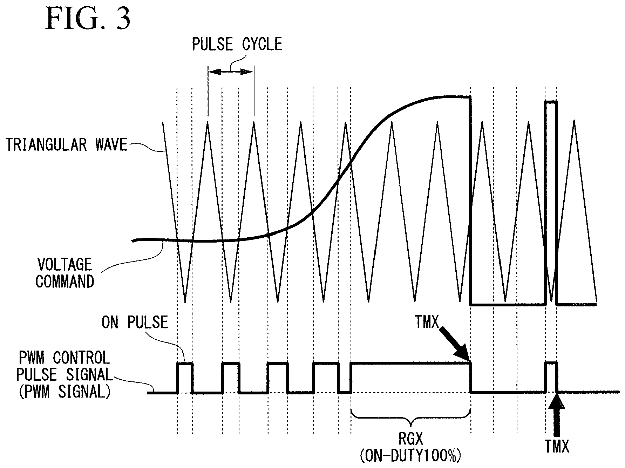

As shown in the example of FIG. 3, in the PWM generating unit 22, the duty cycle of the PWM signal is determined by comparing the voltage waveform of the triangular wave (or a saw-toothed wave) as a reference with the voltage waveform of the voltage command obtained from the control device 10.

Therefore, if the voltage command voltage is modulated, the duty cycle of the PWM signal can be modulated. In FIG. 3, when the voltage command voltage is larger than the voltage of the triangular wave, an on-pulse is obtained.

Furthermore, when the voltage of the voltage command is larger than the maximum voltage of the triangular wave over a plurality of pulse cycles, the on-duty cycle of the PWM signal becomes 100% (fully-on), and the on-signal can be obtained in the entire region (region RGX).

In this way, when the voltage command voltage is raised so that the voltage of the command voltage becomes larger than the voltage of the triangular wave over a plurality of pulse cycles, the control device 10 can set the on-duty cycle of the PWM signal to 100% (fully-on) in the raised region, and the ON signal can be obtained in the entire region.

Therefore, in the present embodiment, the control device 10 corrects the voltage waveforms of the AC voltage commands vu*, vv*, and vw* to the voltage waveform raised to a voltage larger than the maximum voltage of the triangular wave, and can perform the two-arm type control.

### (Pulse signal stop control)

As described above, in the present embodiment, in order to perform the two-arm type control first, the AC voltage commands vu*, vv*, and vw* are corrected to the AC voltage command with the raised voltage at an electrical angle (peak voltage region RGP) of 60° centered on the peak voltage of the sine wave.

If the DC voltage Vdc is converted into the AC voltages vu, vv, and vw with the raised AC voltage command as is, the respective line voltages of the AC voltages vu, vv, and vw become a distorted waveform as compared to the sine wave. For this reason, the AC voltage commands vu*, vv*, and vw* need to be further shaped so that the respective line voltages of the AC voltages vu, vv, and vw have a waveform approximate to a sine wave.

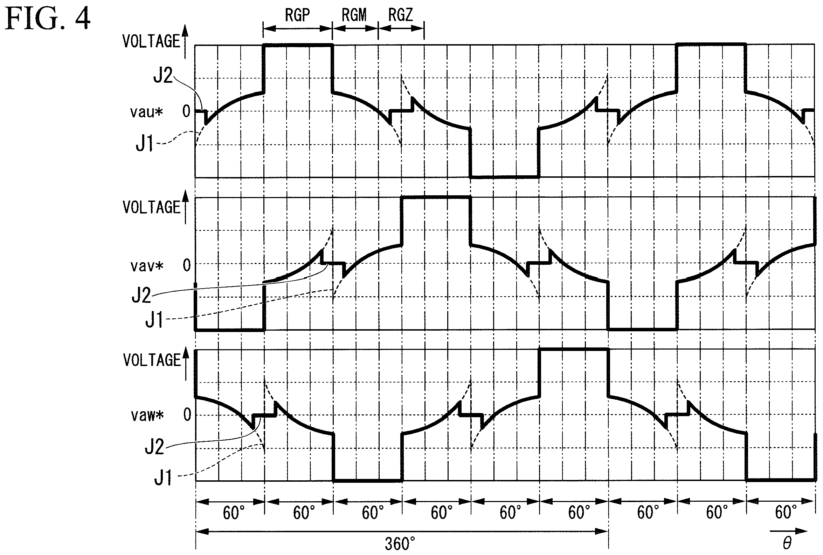

For example, as shown in FIG. 4, a case where the voltage of the peak voltage region RGP is raised to be a rectangular wave will be described. In FIG. 4, a horizontal axis represents the phase θ and a vertical axis represents the voltage.

In order to set each line voltage of the AC voltages vu, vv, and vw to a sine wave, the AC voltage command needs to be shaped into a waveform having ringing in the zero voltage region RGZ as the raised compensation. Here, the "zero voltage region RGZ" is a region from the voltage 0 to 0 including two peaks of ringing and two tails.

Specifically, if the AC voltage commands vu*, vv*, and vw* are shaped into the waveform J1 indicated by the broken line in FIG. 4, the respective line voltages of the AC voltages vu, vv, and vw can be set to a sine waveform.

However, when the inverter main circuit 20 is driven by the waveform J1 having ringing in the zero voltage region RGZ, the switching loss of each switching element in the zero voltage region RGZ increases.

Here, a waveform which can be supposed next is a waveform J2 indicated by a solid line of FIG. 4.

When the AC voltage commands vu*, vv*, and vw* are respectively corrected to the waveforms J2 indicated by a solid line in FIG. 4, it is possible to suppress the switching loss of each switching element in the zero voltage region RGZ. The waveform J2 is a waveform capable of stopping the PWM signal due to a period in which the voltage is 0 in the mask period of the zero voltage region RGZ.

In FIG. 4, vau*, vav*, and vaw* are respectively shown as the AC voltage commands in which the AC voltage commands vu*, vv*, and vw* are corrected to the waveforms J2.

As described above, the duty cycle of the PWM signal is determined by comparing the voltage waveform of the reference triangular wave with the voltage waveform of the voltage command obtained from the control device 10. By setting the voltage of the voltage command waveform to be smaller than the voltage of the minimum value of the voltage waveform of the triangular wave as shown at the timing TMX of FIG. 3, the control device 10 can stop the PWM signal at an arbitrary timing. In this embodiment, if the voltage command voltage to be output to the PWM generating unit 22 is set to 0, the voltage can be set to a voltage that is at least smaller than the minimum value of the voltage waveform of the triangular wave.

### (Compensation command)

However, when the AC voltage commands vu*, vv*, and vw* are respectively corrected to the AC voltage commands vau*, vav*, and vaw* and are output to the inverter main circuit 20, there is a possibility that the line voltage may be distorted in each mask period of the zero voltage region RGZ.

Here, in the present embodiment, the AC voltage commands vu*, vv*, and vw* are respectively corrected to the corrected AC voltage commands vvu*, vvv*, and vvw* so that the waveform J3 corresponds to each phase of the phase.

That is, each of the AC voltage commands vu*, vv*, and vw* is corrected to the waveform J3 which stops the PWM signal in the zero voltage region RGZ and compensates for the distortion of the line voltage due to the stopping command.

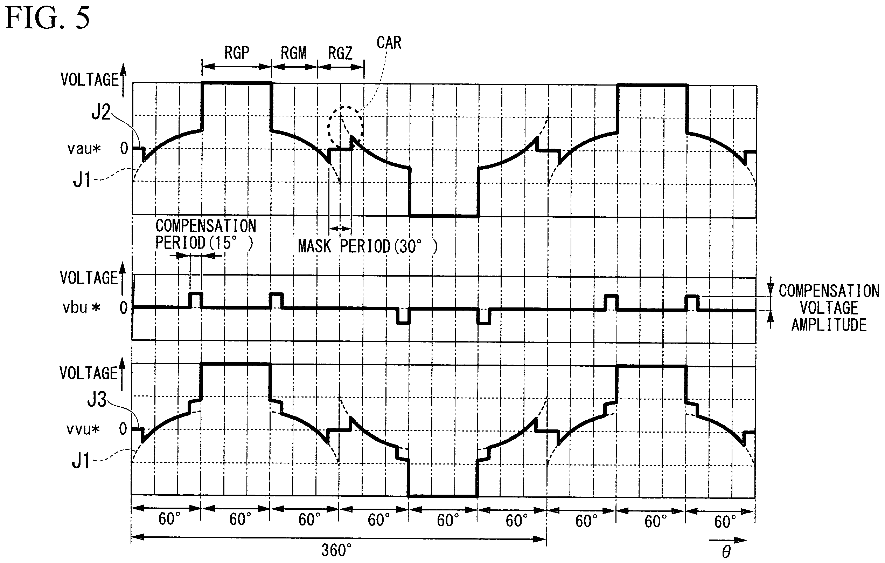

As an example, the U phase will be described. FIG. 5 shows an example in which a compensation voltage command vbu* having a waveform Jb is added to the AC voltage command vau* having the waveform J2 to be corrected to the corrected AC voltage command vvu* having the waveform J3. In FIG. 5, a horizontal axis indicates a phase θ and a vertical axis indicates a voltage.

The waveform J2 (the upper part of FIG. 5) is a waveform of the AC voltage command vau* and is a waveform in which a mask period is set to an electric angle of 30° around the ringing timing of the waveform J 1.

The waveform Jb (the middle part of FIG. 5) includes a plurality of rectangular voltages as compensation voltages (compensation commands).

The waveform J3 (the lower part of FIG. 5) is a waveform of the corrected AC voltage command vvu* and is a waveform in which the waveform Jb is combined with the waveform J 2.

The waveform Jb will be described in detail.

The waveform Jb is a waveform having a plurality of rectangular waves in which the compensation period is the width and the amplitude of the compensation voltage is the height.

In the present embodiment, the width (the compensation period) and the height (the amplitude of the compensation voltage) of the rectangular voltage of the waveform Jb are set as below for the waveform J2 having a mask period of an electric angle of 30° around the ringing timing and a peak voltage region RGP of an electric angle of 60° described above.

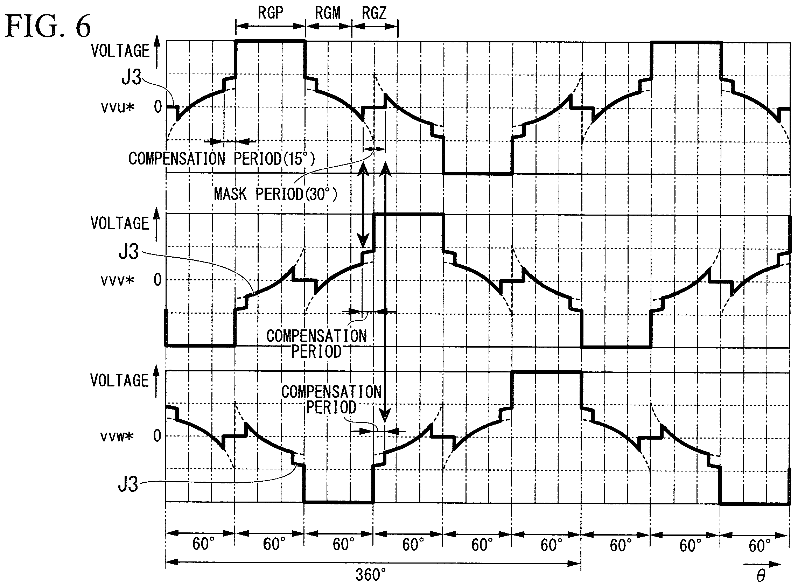

The waveform Jb has a rectangular voltage in a compensation period of an electric angle of 15° between adjacent timings at both outer sides of the peak voltage region RGP of the waveform J2. As described in FIG. 6, each timing having a rectangular voltage corresponds to each mask period of each of two different phases.

The waveform Jb has a rectangular voltage corresponding to each of two peak voltage regions RGP in one period (an electric angle of 360°) and has four rectangular voltages in total in one period (an electric angle of 360°). Each rectangular voltage protrudes to match the protruding direction of the waveform J2 in each peak voltage region RGP.

The height of the amplitude of the compensation voltage may be set to any height as long as the height can reduce the distortion of the line voltage.

For example, the ringing of the waveform J1 may be an average value of a voltage trimmed in the mask period so that the ringing is corrected to a voltage of 0 as in the waveform J2.

Specifically, the height of the amplitude of the compensation voltage may be set to correspond to the average voltage of the mountain-shaped waveform CAR trimmed in the period of the second half (or the first half) of the mask period so that the ringing of the waveform J1 is corrected to a voltage of 0 as in the waveform J2.

The waveforms in which the AC voltage commands vu*, vv*, and vw* are corrected to the waveforms J3 as the corrected AC voltage commands wu*, vw*, and vvw* are indicated by a solid line in FIG. 6. In FIG. 6, a horizontal axis indicates a phase θ and a vertical axis indicates a voltage.

From such a relationship of the waveform, it can be understood that each waveform is provided with compensation periods for the other two different phases during its own mask period.

For example, the compensation period of the corrected AC voltage command vvv* may be provided in the period of the first half of the mask period of the waveform of the corrected AC voltage command vvu*. Similarly, the compensation period of the corrected AC voltage command vvw* may be provided in the period of the second half of the mask period of the waveform of the corrected AC voltage command vvu*.

Thus, the compensation voltage is provided so that the line voltage which is different from the voltages of the other phases compensates for the mutually trimmed ringing.

As described above, when the AC voltage commands vu*, vv*, and vw* are corrected to the waveforms J3, each of the line voltages of the AC voltages vu, vv, and vw is maintained as a waveform approximate to a sine wave.

Therefore, the correction command unit 18 corrects the AC voltage commands vu*, vv*, and vw* to the waveforms J3 as the corrected AC voltage commands vvu*, vvv*, and vvw*.

The corrected AC voltage commands vvu*, vvv*, and vvw* corrected to the waveform J3 are converted into PWM signals in the PWM generating unit 22. Further, the PWM generating unit 22 generates each gate signal in synchronization with the PWM signal.

As an example, a relationship between the corrected AC voltage command vvu* and the gate signal SG (21UH) will be described.

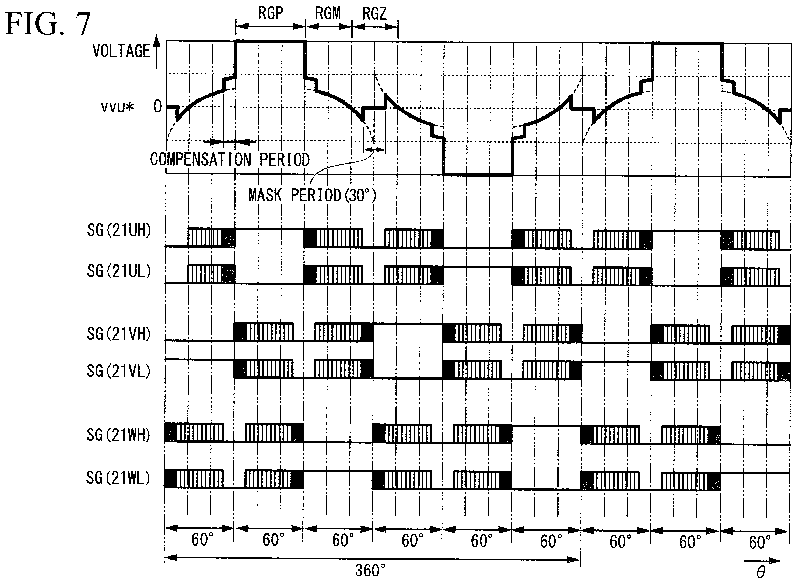

As shown in FIG. 7, the corrected AC voltage command vvu* is converted into the gate signal SG (21UH). In FIG. 7, the horizontal axis represents a phase θ and the vertical axis represents the voltage.

In the peak voltage region RGP, the on-duty cycle of the gate signal SG (21UH) becomes 100% (fully-on), and an ON signal is obtained in the entire region.

Conversely, the gate signal SG (21UL) becomes an OFF signal (PWM pulse stop) in the entire region.

In the intermediate voltage region RGM between the peak voltage region RGP and the zero voltage region RGZ, the gate signal SG (21UH) becomes a pulse train of on-duty cycle proportional to the voltage of the corrected AC voltage command vvu*.

The gate signal SG (21UL) becomes a pulse train of a reverse pattern of the gate signal SG (21UH). That is, when the gate signal SG (21UH) is an on-pulse, the gate signal SG (21UL) becomes an off-pulse, and when the gate signal SG (21UH) is an off-pulse, the gate signal SG (21UL) becomes an on-pulse.

In the zero voltage region RGZ, a period other than the mask period is the same as the intermediate voltage region RGM.

In the zero voltage region RGZ, the on-duty cycle of the gate signal SG (21UH) becomes 0% (fully-off), and the gate signal SG (21UH) becomes the OFF signal in the entire region. Therefore, in the zero voltage region RGZ, a period (mask period) during which the PWM signal is stopped is obtained.

Similarly to the gate signal SG (21UH), the gate signal SG (21UL) becomes an OFF signal (PWM pulse stop) in the entire region.

As shown in FIG. 7, the gate signal SG (21VH) and the gate signal SG (21VL) into which the corrected AC voltage command vvv* is converted have phases respectively delayed by 120° from the gate signal SG (21UH) and the gate signal SG (21UL).

As shown in FIG. 7, the gate signal SG (21WH) and the gate signal SG (21WL) into which the corrected AC voltage command vvw* is converted have phases respectively delayed by 240° (phases respectively advanced by 120°) from the gate signal SG (21UH) and the gate signal SG (21UL).

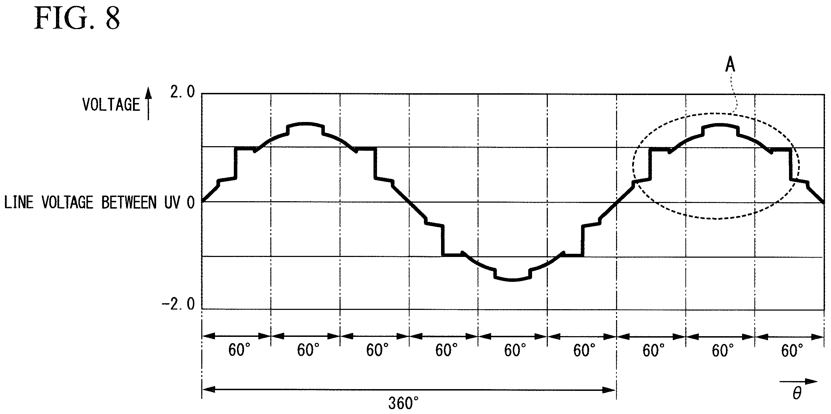

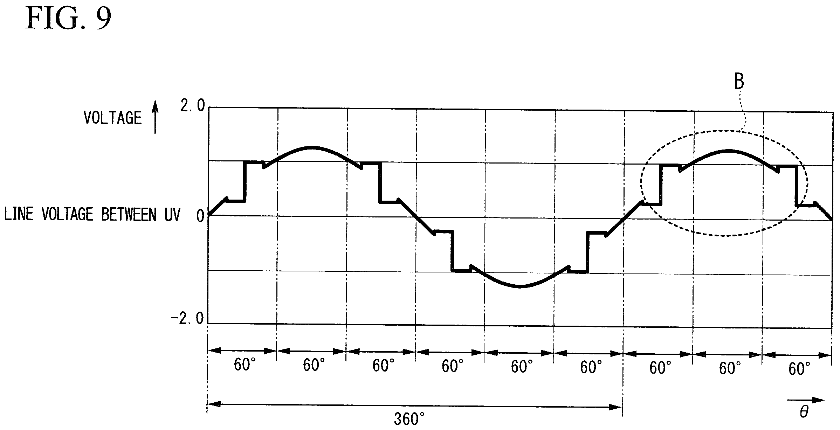

FIG. 8 shows a line voltage between UV as an example among the line voltages controlled by the gate signals of FIG. 7. FIG. 9 shows a line voltage between UV as a reference example when the waveform J2 (vau*, vav*, vaw*) is input to the PWM generating unit 22 as the corrected AC voltage commands vvu*, vvv*, and vvw* (when the distortion of the line voltage is not compensated for).

When a part A of FIG. 8 and a part B of FIG. 9 are compared with each other, the waveform of FIG. 8 is different from the waveform of FIG 9 in that the distortion from a sine wave is reduced and the waveform is similar to a sine wave. In contrast, the waveform of FIG. 9 is a raised waveform (a waveform close to a rectangular wave) as compared with the waveform of FIG. 8. Additionally, a horizontal axis of FIGS. 8 and 9 indicates a phase θ. A vertical axis of FIGS. 8 and 9 indicates a voltage on an arbitrary scale.

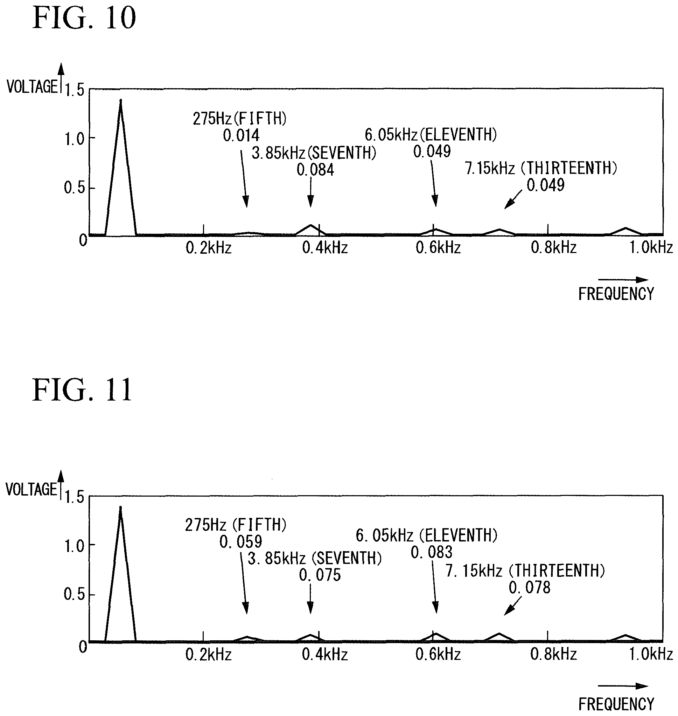

FIG. 10 shows frequency analysis results for a waveform of FIG. 8 of the present embodiment. FIG. 11 shows frequency analysis results for a waveform of FIG. 9 of a reference example. A horizontal axis of FIGS. 10 and 11 indicates a frequency. A vertical axis of FIGS. 10 and 11 indicates a voltage on the same arbitrary scale.

As shown in FIGS. 10 and 11, it can be understood that a fifth harmonic component of the present embodiment is reduced as compared with a fifth harmonic component of the reference example.

### (Action and effects)

Since the inverter apparatus 1 stops the PWM pulse signal in the zero voltage region, the inverter apparatus 1 can reduce the switching loss.

Further, since the inverter apparatus 1 compensates for the distortion of the line voltage due to the stopping of the PWM signal by the compensation command, it is possible to suppress an increase in the harmonic component of the line voltage waveform.

The waveform J2 has a period in which a voltage is 0 in the mask period of the zero voltage region RGZ. For this reason, when the AC voltages vu, vv, and vw are generated by using the waveform J2 as the corrected AC voltage commands vvu*, vvv*, and vvw*, the line voltage between phases is distorted and the harmonic component increases as in the examples shown in FIGS. 9 and 11.

On the contrary, the inverter apparatus 1 generates the AC voltages vu, vv, and vw by driving the inverter main circuit 20 with the corrected AC voltage commands vvu*, vvv*, and vvw* having the waveforms J3. For this reason, the distortion of the line voltage between phases and the harmonic component are suppressed as in the examples shown in FIGS. 8 and 10.

In addition, the inverter apparatus 1 adds the compensation command to a phase different from a phase to which a command of stopping the PWM signal is added. For this reason, it is possible to suppress the harmonic component while stopping the PWM signal. When the command of stopping the PWM signal is maintained, the inverter apparatus 1 can maintain switching loss reduction performance due to the stopping of the PWM signal.

In addition, since the inverter apparatus 1 turns on the switching element of the upper arm and the switching element of the lower arm (fully-on) over all PWM periods in a region in which the phase voltages of the 3-phase AC voltages are large, the switching loss can be reduced.

In addition, since the inverter apparatus 1 generates an output voltage phase from the speed command, it is possible to stop the PWM signal at a phase matching the speed command.

In addition, since the inverter apparatus 1 performs V/f control as will be described below, a delay at the time of switching from the switching control to the PWM stop control is short. For that reason, it is possible to reduce distortion of the motor output current waveform.

The inverter apparatus 1 controls an off state of the PWM pulse signal by adding a command of stopping the PWM signal to the voltage command.

As described above, since the duty cycle of the PWM signal is determined by comparing the voltage waveform of the triangular wave with the voltage waveform of the voltage command obtained from the control device 10, the PWM signal can be stopped at an arbitrary timing.

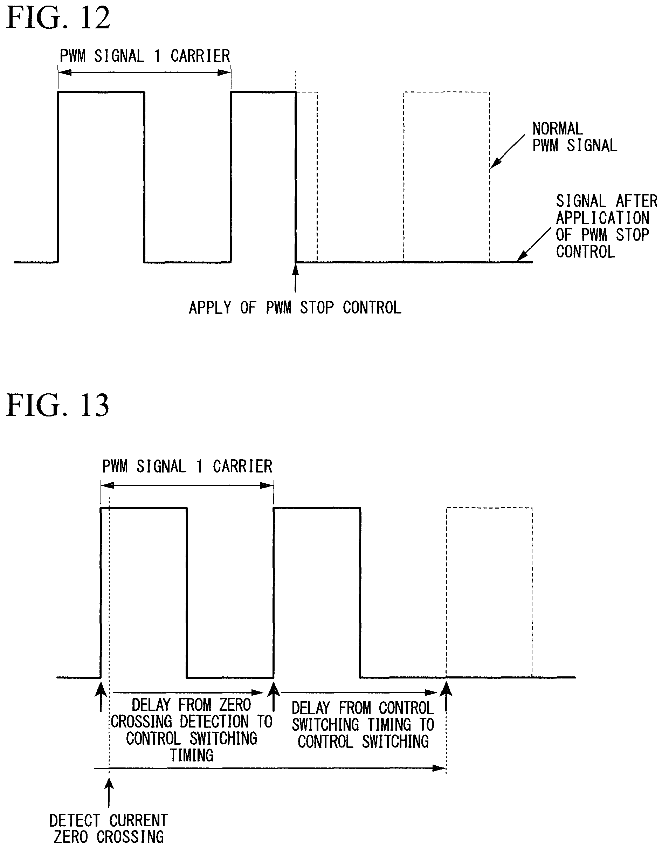

For this reason, as shown in FIG. 12, since it is possible to stop the PWM signal at an arbitrary timing in the PWM pulse signal (the carrier signal), it is possible to switch to the PWM stop control with almost no delay.

Thus, since the inverter apparatus 1 can switch to the PWM stop control with almost no delay, it is possible to suppress the distortion of the motor output current waveform.

In contrast, the inverter apparatus of the vector control type as in Patent Document 1 stops the PWM signal after detecting the zero crossing of the current. For this reason, as a reference example, as shown in FIG. 13, the inverter apparatus of the vector control type switches to the actual PWM stop control with a delay of at least one PWM pulse signal (one carrier) and two PWM pulse signals (two carriers) to a maximum after detecting the zero crossing of the current. Thus, the motor output current waveform is distorted.

In addition, the inverter apparatus 1 can switch from the PWM stop control to the switching control with almost no delay as well as switching from the switching control to the PWM stop control (the control of the mask period). Similarly, switching from the switching control (the control of the middle voltage range RGM) to fully-on control (the control of the peak voltage range RGP) and switching from fully-on control to the switching control can be performed with almost no delay.

### <Second embodiment>

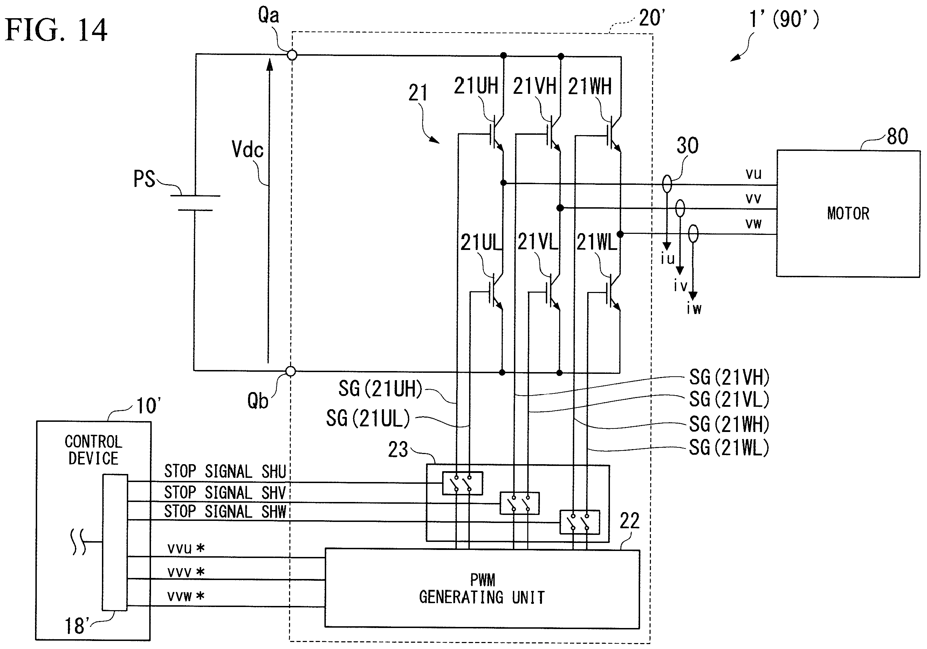

Hereinafter, an inverter apparatus according to a second embodiment will be described in detail with reference to FIG. 14.

The inverter apparatus according to the present embodiment is basically the same as the first embodiment, except that a stop signal for separately stopping the pulse is separately transmitted to the inverter main circuit as a correction command.

An inverter apparatus 1' of the present embodiment is mounted in an outdoor unit of an air conditioner (an air conditioning unit) 90'.

As shown in FIG. 14, the inverter apparatus 1' includes a control device 10' having a correction command unit 18' and an inverter main circuit 20' having a pulse stop unit 23.

The correction command unit 18' does not embed a command of stopping the PWM signal but transmits a correction command to the inverter main circuit 20'. That is, the correction command unit 18' separately transmits the corrected AC voltage command and the stop signal for stopping the pulse to the pulse stop unit 23, as the correction commands.

In the present embodiment, the correction command unit 18' transmits the corrected AC voltage commands vvu*, vvv*, and vvw* and the stop signals SHU, SHV, and SHW to the inverter main circuit 20', as the correction commands.

The corrected AC voltage commands vvu*, vw*, and vvw* are transmitted to the PWM generating unit 22, and the stop signals SHU, SHV, and SHW are transmitted to the pulse stop unit 23.

The pulse stop unit 23 is provided in the wiring between the PWM generating unit 22 and each switching element in series with the PWM generating unit 22 and each switching element. When the off-pulses of the stop signals SHU, SHV, SHW are input, the pulse stop unit 23 stops the PWM signal transmitted from the PWM generating unit 22 to each switching element.

The pulse stop unit 23 stops the gate signal SG (21UH) and the gate signal SG (21UL) when the stop signal SHU becomes an off pulse.

The pulse stop unit 23 stops the gate signal SG (21 VH) and the gate signal SG (21VL) when the stop signal SHV becomes an off pulse.

The pulse stop unit 23 stops the gate signal SG (21WH) and the gate signal SG (21WL) when the stop signal SHW becomes an off pulse.

The corrected AC voltage commands vvu*, vvv*, and vvw* can be set to, for example, a waveform in which the waveform Jb is added to the waveform J1 corresponding to each phase of the phase. In this case, the stop signals SHU, SHV, and SHW are set to signals having off pulses at the timing of the zero voltage region RGZ of the waveform J 1.

The PWM generating unit 22 generates a PWM signal with an on-duty cycle proportional to the voltage at each timing of each waveform (the waveform J1) of the corrected AC voltage commands vvu*, vvv*, and vvw*. The PWM generating unit 22 generates each gate signal in synchronization with the PWM signal. The pulse stop unit 23 stops each gate signal generated at the timing of the zero voltage region RGZ.

As a result, a gate signal similar to that of the first embodiment is supplied to each switching element.

Also in the this embodiment, the inverter apparatus 1' can stop the PWM signal at an arbitrary timing of the PWM pulse signal (the carrier signal) and can switch to the PWM stop control with almost no delay. Further, the inverter apparatus 1' can compensate for the distortion of the line voltage.

### <Modified examples>

In the first embodiment, the correction command unit 18 corrects the AC voltage commands vu*, vv*, and vw* to the waveforms J3. In this case, the correction command unit 18 may sequentially generate the waveform J1, the waveform J2, and the waveform J3 from the AC voltage commands vu*, vv*, and vw* or may generate the waveform J3 by one process from the AC voltage commands vu*, vv*, and vw*.

In each of the embodiments, in the correction command units 18 and 18', the respective sine waves of the AC voltage commands vu*, vv*, and vw* are raised in the peak voltage region RGP. As a modified example, the voltage command (the δ-axis voltage command vδ* and the γ-axis voltage command vγ*) may be corrected so that the AC voltage commands vu*, vv*, and vw* are raised in the peak voltage region RGP in the voltage command unit 12.

For example, when the γ-axis voltage command vγ* is related to the amplitudes of the AC voltage commands vu*, vv*, and vw*, the γ-axis voltage command vγ* is corrected to a large voltage in the voltage command unit 12. If the γ-axis voltage command vγ* is corrected to a large voltage, since the respective amplitudes of the AC voltage commands vu*, vv*, and vw* can be increased, the amplitudes can be raised at least in the peak voltage region RGP.

In each embodiment, an IGBT is used for the switching element, but as a modified example, an SJ-MOSFET may be used for the switching element.

In the present embodiment, a silicon semiconductor switching element is used, but as a modified example, a switching element of a wide gap semiconductor such as SiC or GaN may be used.

In the present embodiment, as PWM control, the control of turning on both the switching element of the upper arm and the switching element of the lower arm over the entire region of the plurality of cycles of the PWM cycle among the large regions of each phase voltage of the 3-phase AC voltage is performed, as a two-arm type control.

As a modified example, at least one of the switching element of the upper arm and the switching element of the lower arm may be turned on. As another modified example, the control unit may generate only the command of stopping the PWM control pulse signal and the compensation command of compensating for the distortion of the line voltage due to the stopping command without generating the two-arm type control command.

In the first embodiment, the voltages of the corrected AC voltage commands vvu*, vvv*, and vvw* are corrected to 0 in the mask period. However, as a modified example, the voltage may be corrected to a positive value smaller than the voltage of the minimum value of the voltage of the triangular wave waveform.

In the first embodiment, the mask period is set to a part of periods of the zero voltage region RGZ. However, the mask period may be corrected so that the mask period includes at least two peaks of ringing or may be corrected so that the mask period includes at least a part of periods of the zero voltage region RGZ. In another modified example, the mask period may be set to all periods of the zero voltage region RGZ.

The inverter apparatuses of the embodiments are controlled according to the V/f control, but in a modified example, vector control may be performed if there is no problem in delay of the PWM stop control.

In the embodiments, the correction command unit generates a rectangular voltage as a compensation voltage, but in a modified example, a multi-stage compensation voltage or a triangular compensation voltage may be generated. In another modified example, a compensation voltage of a mountain-shaped waveform CAR trimmed in the second half (or the first half) of the mask period may be generated.

### <Method of controlling inverter apparatus>

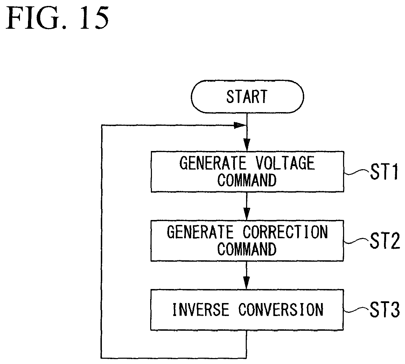

A method of controlling the inverter apparatuses 1 and 1' in each of the above embodiments will be described with reference to FIG. 15.

First, the voltage command unit 12 generates a voltage command, using the speed command of the motor 80 (ST1: voltage command generation step).

Subsequently, the correction command unit 18 or 18' generates a correction command in which a command of stopping a PWM control pulse signal and a compensation command of compensating for a line voltage due to the stopping command are added to a voltage command in at least a part of periods of the zero voltage region of the voltage command (ST2: correction command generation step).

Subsequently, the inverter main circuits 20 and 20' switch the switching element group 21 with the pulse signal generated on the basis of the correction command and thereby convert the DC voltage into the 3-phase AC voltage (ST3: inverse conversion step).

Further, as shown in FIG. 15, the process returns to the voltage command generation step ST1 again, and the processes of ST1 to ST3 are repeated in the same way.

When a termination instruction is input to the inverter apparatus 1 and 1' by the user, the repeated processes of ST1 to ST3 are terminated.

The "voltage command generation step ST1" and the "correction command generation step ST2" of the control method according to the present embodiment are performed by the inverter apparatuses 1 and 1'. However, as a modified example, at least one step of the "voltage command generation step ST1" and the "correction command generation step ST2" may be performed by another apparatus or by a user.

In each of the above-described embodiments, a program for realizing various functions of the control device is recorded in a computer-readable recording medium, and a program recorded in the recording medium is read by a computer system such as a microcomputer and is executed, thereby performing various processes. Here, the procedure of various processes of the CPU of the computer system is stored in a computer readable recording medium in the form of a program, and the computer reads and executes this program, thereby performing the above various processes. Further, the computer-readable recording medium refers to a magnetic disk, a magneto-optical disk, a CD-ROM, a DVD-ROM, a semiconductor memory, or the like. Further, the computer program may be distributed to a computer via a communication line, and the computer receiving the distribution may execute the program.

While several embodiments of the invention have been described, these embodiments are presented by way of example and are not intended to limit the scope of the invention. These embodiments can be implemented in various other forms, and various omissions, substitutions, and changes can be made within the scope that does not depart from the gist of the invention. These embodiments or modified examples thereof are included in the invention described in the claims and the equivalent scope thereof as well as being included in the scope and gist of the invention.

### [Industrial Applicability]

According to one of the above-described aspects, it is possible to suppress an increase in the harmonic component due to the stopping of the PWM signal.

### EXPLANATION OF REFERENCES

1 Inverter apparatus
1' Inverter apparatus
10 Control device
10' Control device
11 Speed command unit
12 Voltage command unit
13 2-phase/3-phase conversion unit
14 3-phase/2-phase conversion unit
15 Power factor angle setting unit
16 Speed correction unit
17 Phase calculation unit
18 Correction command unit
18' Correction command unit
20 Inverter main circuit
20' Inverter main circuit
21 Switching element group
21UH Switching element
21UL Switching element
21VH Switching element
21VL Switching element
21WH Switching element
21WL Switching element
22 PWM generating unit
23 Pulse stop unit
30 Motor current detection unit
80 Motor
90 Air conditioner (air conditioning unit)
90' Air conditioner (air conditioning unit)
PS DC power supply
Qa Positive electrode DC terminal
Qb Negative electrode DC terminal

## Claims

1. An inverter apparatus capable of driving a motor, comprising:
a voltage command unit which is configured to generate a voltage command on the basis of a speed command of the motor;
a correction command unit which is configured to generate a correction command in which a command of stopping a PWM control pulse signal and a compensation command of compensating for distortion of a line voltage due to the stopping command are added to the voltage command in at least a part of periods of a zero voltage region of the voltage command; and
an inverter main circuit which is configured to switch a switching element group with a pulse signal generated on the basis of the correction command and thereby convert a DC voltage into a 3-phase AC voltage.

2. The inverter apparatus according to claim 1,
wherein the correction command unit is configured to generate a correction command of each phase of the 3-phase AC voltages, and
wherein the compensation command is added to a phase different from a phase to which the command of stopping the PWM control pulse signal is added during a period of adding the command of stopping the PWM control pulse signal.

3. The inverter apparatus according to claim 1 or 2,
wherein the correction command unit is configured to add a multi-stage compensation voltage as the compensation command.

4. The inverter apparatus according to any one of claims 1 to 3, wherein the switching element group includes pairs of switching elements of an upper arm and a lower arm in association with each phase of the 3-phase AC voltage, respectively, and
as the PWM control, control of turning on at least one of the switching element of the upper arm and the switching element of the lower arm over the entire region of a plurality of cycles of a PWM cycle among the large regions of each phase voltage of the 3-phase AC voltage is performed.

5. The inverter apparatus according to any one of claims 1 to 4, further comprising:
a phase calculation unit which is configured to integrate an inverter output frequency generated from the speed command and calculate the phase,
wherein the correction command unit is configured to generate the correction command based on the phase.

6. The inverter apparatus according to any one of claims 1 to 5,
wherein V/f control is performed.

7. An air conditioner comprising:
the inverter apparatus according to any one of claims 1 to 6; and
the motor rotationally driven by the 3-phase AC voltage.

8. A method of controlling an inverter apparatus capable of driving a motor, comprising:
a voltage command generation step of generating a voltage command, using a speed command of the motor;
a correction command generation step of generating a correction command in which a command of stopping a PWM control pulse signal and a compensation command of compensating for a line voltage due to the stopping command are added to the voltage command in at least a part of periods of a zero voltage region of the voltage command; and
an inverse conversion step of switching a switching element group by the pulse signal generated on the basis of the correction command and thereby converting a DC voltage into a 3-phase AC voltage.

9. A program which is configured to cause a computer of an inverter apparatus capable of driving a motor and including an inverter main circuit converting a DC voltage into a 3-phase AC voltage by switching a switching element group by a pulse signal generated on the basis of a correction command, to function as:
a voltage command unit which is configured to generate a voltage command using a speed command of the motor; and
a correction command unit which is configured to generate a correction command in which a command of stopping a PWM control pulse signal and a compensation command of compensating for a line voltage due to the stopping command are added to the voltage command in at least a part of periods of a zero voltage region of the voltage command.
